Europäisches Patentamt

European Patent Office

Office européen des brevets

(19)

(11) Numéro de publication : **0 500 422 A1**

# (12) DEMANDE DE BREVET EUROPEEN

(21) Numéro de dépôt : **92400373.4**

(22) Date de dépôt : **12.02.92**

(51) Int. Cl.$^5$ : **B60H 1/00, F16K 7/16**

(30) Priorité : **21.02.91 FR 9102102**

(43) Date de publication de la demande :
**26.08.92 Bulletin 92/35**

(84) Etats contractants désignés :
**DE ES GB IT**

(71) Demandeur : **VALEO THERMIQUE HABITACLE
8, rue Louis-Lormand, La Verriere
F-78320 Le Mesnil-Saint-Denis (FR)**

(72) Inventeur : **Larseneur, Patrick
43, rue des Chantiers
F-78000 Versailles (FR)**

(74) Mandataire : **Gamonal, Didier et al
Société VALEO Service Propriété Industrielle
30, rue Blanqui
F-93406 Saint Ouen (FR)**

(54) **Dispositif de commande d'un courant de fluide comprenant un membrane d'obturation déformable transversalement au courant.**

(57)    Le dispositif comprend une membrane déformable disposée en travers d'une conduite pour le passage d'un fluide, et présentant une fente (3) encadrée par des plis (7) formant soufflet. Cette fente peut être fermée ou ouverte pour régler le débit de fluide.

FIG.1

EP 0 500 422 A1

L'invention concerne un dispositif de commande destiné à assurer l'interruption et le réglage du débit d'un courant de fluide, notamment un courant d'air destiné à être envoyé dans l'habitacle d'un véhicule automobile.

Les installations de chauffage et d'aération, ou de climatisation, de l'habitacle des véhicules automobiles comportent habituellement des dispositifs de commande de courants d'air comprenant un obturateur sous forme d'un volet pivotant ou coulissant disposé dans une conduite pour le courant d'air correspondant. Le mouvement de pivotement ou de coulissement de ces volets et la présence de moyens d'entraînement de ceux-ci implique un encombrement important dans la direction du courant et/ou transversalement à cette direction, qui rend ces dispositifs difficile à loger dans l'espace restreint disponible sous le tableau de bord des véhicules.

Le but de l'invention est de remédier à cet inconvénient et de procurer un dispositif de commande peu encombrant.

L'invention a pour objet un dispositif de commande d'un courant de fluide comprenant un obturateur disposé dans une conduite pour ledit courant de fluide et pouvant prendre une première position, dans laquelle il obture ladite conduite et une seconde position dans laquelle il permet le passage du courant de fluide, caractérisé en ce que l'obturateur est une membrane déformable fixée par sa périphérie à la paroi de la conduite et présentant au moins une fente qui la traverse dans son épaisseur et deux séries de plis formant soufflet s'étendant le long de cette fente de part et d'autre de celle-ci, les bords de la fente pouvant être déformés par un organe d'entraînement pour être mutuellement écartés en amenant la membrane dans la première position dans laquelle la fente est ouverte en forme de citron, et pour être serrés en amenant la membrane dans la seconde position, dans laquelle la fente est fermée.

Avantageusement, les bords de la fente sont munis d'éléments de renfort allongés, notamment sous forme de lames métalliques élastiques dont les faces sont mutuellement en regard.

Selon un premier mode de réalisation de l'invention, chaque bord de la fente est muni d'une lame métallique de renfort unique dont les extrémités se rapprochent l'une de l'autre dans la première position et s'éloignent l'une de l'autre dans la seconde position.

Selon un second mode de réalisation, chaque bord de la fente est muni d'au moins deux lames métalliques pouvant glisser télescopiquement l'une sur l'autre, l'ensemble formé par ces lames télescopiques ayant une longueur plus grande dans la première position que dans la seconde position et ses extrémités étant fixées à la paroi de la conduite.

L'organe d'entraînement peut comprendre un câble coulissant dans une gaine dont une extrémité est attachée dans la zone médiane d'un premier élément de renfort, une partie du câble faisant saillie au-delà de ladite extrémité et étant attachée dans la zone médiane d'un second élément de renfort opposé au premier.

L'invention vise également une membrane propre à faire partie d'un dispositif tel que défini ci-dessus.

D'autres caractéristiques et avantages de l'invention ressortiront de la description donnée ci-après, et des dessins annexés dans lesquels :

– la figure 1 est une vue en plan d'une membrane d'obturation d'un dispositif selon l'invention, en position d'ouverture;

– la figure 2 est une vue en coupe selon la ligne II-II de la figure 1;

– la figure 3 est une vue analogue à la figure 2, la membrane étant en position de fermeture; et

– la figure 4 est une vue analogue à la figure 1, relative à une variante.

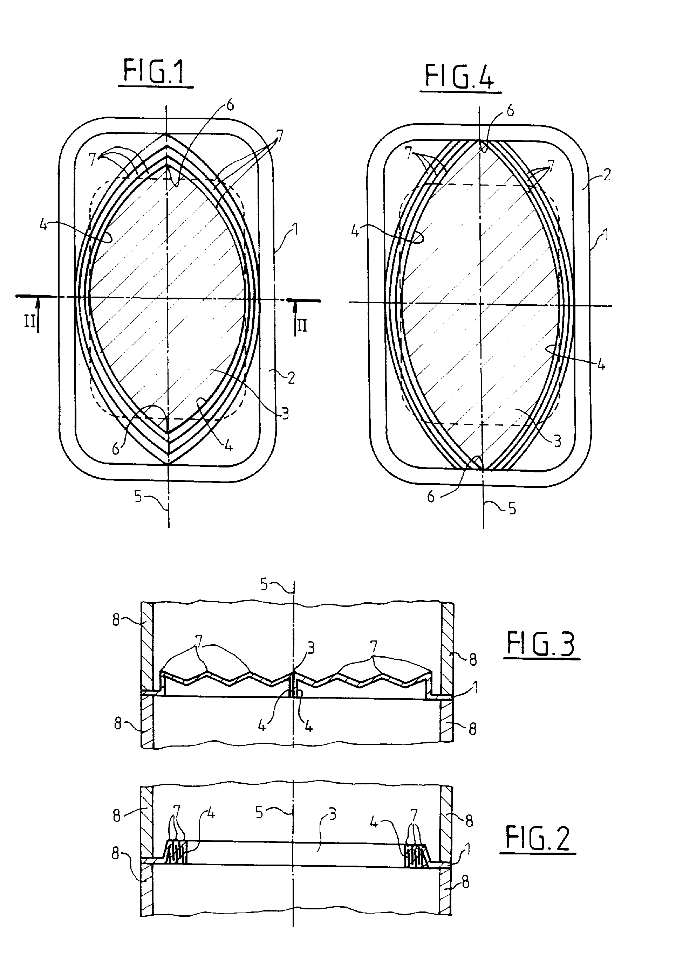

La membrane illustrée aux figures 1 à 3 présente un bord périphérique 1 de forme rectangulaire à sommets arrondis, qui limite une zone marginale annulaire 2 s'étendant dans un plan. La membrane est traversée dans son épaisseur par une fente 3 limitée par deux lèvres 4 qui s'étendent respectivement de part et d'autre du plan longitudinal médian 5 de la membrane, perpendiculaire au plan de la région marginale 2, et qui se raccordent mutuellement en deux zones 6 mutuellement écartées dans le plan 5. Les lèvres 4 sont raccordées à la zone marginale 2, sans discontinuité, par deux séries de plis 7 en forme de soufflets qui s'étendent également longitudinalement de part et d'autre du plan 5 dans lequel se rejoignent mutuellement les plis des deux séries.

La zone marginale 2 de la membrane étant fixée à la paroi d'une conduite 8 de circulation de fluide, les lèvres 4 peuvent être écartées l'une de l'autre dans leur région médiane, comme montré aux figures 1 et 2, par des moyens qui seront indiqués ci-après, ouvrant ainsi la fente 3 en forme de lentille. Les plis 7 de chaque série sont alors serrés les uns contre les autres, et le courant de fluide peut traverser la membrane par la fente 3. Inversement, les lèvres 4 peuvent être appliquées l'une contre l'autre, comme montré à la figure 3, fermant ainsi la fente et interdisant le passage du fluide. Les plis 7 sont alors relativement tendus, et les zones de jonction 6 des lèvres sont plus éloignées l'une de l'autre que dans la position de la figure 1.

Pour assurer une ouverture et une fermeture franches et stables de la fente, les lèvres 4 sont liées sur toute leur longueur à des éléments de renfort sous forme de lames métalliques flexibles élastiquement, non représentées. Ces lames peuvent être attachées à mi-longueur, respectivement, à l'extrémité d'une gaine et à un câble propre à coulisser dans cette gaine et faisant saillie au-delà de ladite extrémité, le coulissement du câble dans la gaine assurant le mouvement d'ouverture et de fermeture de la fente.

La figure 4 représente une variante de la membrane pour laquelle les coupes transversales des figures 2 et 3 restent valables, et les mêmes signes de référence y sont utilisés qu'à la figure 1 pour désigner des éléments analogues. La membrane de la figure 4 diffère de celle de la figure 1 en ce que les lèvres 4 s'étendent longitudinalement jusqu'à la zone marginale plane 2, leurs deux zones de jonction 6 étant fixes. La longueur des lèvres est donc plus grande dans la position ouverte illustrée aux figures 2 et 4 que dans la position fermée illustrée à la figure 3. Corollairement, les deux séries de plis 7 s'étendent également longitudinalement jusqu'à la zone 2, de part et d'autre du plan 5, sans se rejoindre mutuellement. Chacune des lames métalliques de renfort associées respectivement aux deux lèvres 4 de la figure 1 est remplacée par deux lames superposées sur une partie de leur longueur et pouvant coulisser l'une sur l'autre dans la direction longitudinale de façon à constituer un ensemble de longueur variable. Les deux extrémités de cet ensemble, appartenant respectivement aux deux lames, sont fixées à la paroi de la conduite au niveau des jonctions 6 des lèvres.

Le dispositif selon la figure 1 présente l'avantage d'être plus simple à réaliser que celui selon la figure 4. En contrepartie, ce dernier offre une section de passage maximale pour le fluide (surface hachurée) plus grande, pour une même section de la conduite.

Le débit du fluide peut être réglé de façon continue en faisant varier la distance entre les zones médianes des lèvres 4 de la valeur maximale correspondant à la position des figures 1, 2 et 4 à la valeur zéro correspondant à la position de la figure 3.

Plusieurs fentes telles que 3, chacune limitée par deux lèvres telles que 4 et associées à deux séries de plis tels que 7, peuvent être prévues dans une même membrane.

**Revendications**

**1.-** Dispositif de commande d'un courant de fluide comprenant un obturateur disposé dans une conduite (8) pour ledit courant de fluide et pouvant prendre une première position dans laquelle il obture ladite conduite et une seconde position dans laquelle il permet le passage du courant de fluide, caractérisé en ce que l'obturateur est une membrane déformable fixée par sa périphérie (2) à la paroi de la conduite (8) et présentant au moins une fente (3) qui la traverse dans son épaisseur et deux séries de plis (7) formant soufflet s'étendant le long de cette fente de part et d'autre de celle-ci, les bords (4) de la fente pouvant être déformés par un organe d'entraînement pour être mutuellement écartés en amenant la membrane dans la première position, dans laquelle la fente est ouverte en forme de lentille, et pour être serrés en amenant la membrane dans la seconde position, dans laquelle la fente est fermée.

**2.-** Dispositif selon la revendication 1, caractérisé en ce que les bords (4) de la fente (3) sont munis d'éléments de renfort allongés.

**3.-** Dispositif selon la revendication 2, caractérisé en ce que les éléments de renfort sont des lames métalliques élastiques dont les faces sont mutuellement en regard.

**4.-** Dispositif selon l'une des revendications 2 et 3, caractérisé en ce que chaque bord (4) de la fente est muni d'une lame métallique de renfort unique dont les extrémités se rapprochent l'une de l'autre dans la première position et s'éloignent l'une de l'autre dans la seconde position.

**5.-** Dispositif selon la revendication 3, caractérisé en ce que chaque bord de la fente est muni d'au moins deux lames métalliques pouvant glisser télescopiquement l'une sur l'autre, l'ensemble formé par ces lames télescopiques ayant une longueur plus grande dans la première position que dans la seconde position et ses extrémités étant fixées à la paroi de la conduite.

**6.-** Dispositif selon l'une des revendications précédentes, caractérisé en ce que l'organe d'entraînement comprend un câble coulissant dans une gaine dont une extrémité est attachée dans la zone médiane d'un premier élément de renfort, une partie du câble faisant saillie au-delà de ladite extrémité et étant attachée dans la zone médiane d'un second élément de renfort opposé au premier.

**7.** Membrane propre à faire partie d'un dispositif selon l'une des revendications précédentes, comprenant une zone périphérique (2) propre à être fixée à la paroi d'une conduite, et présentant une fente (3) qui la traverse dans son épaisseur et deux séries de plis (7) formant soufflet s'étendant le long de cette fente de part et d'autre de celle-ci, les bords (4) de la fente pouvant être écartés pour ouvrir la fente en forme de lentille et serrés pour fermer la fente.

## FIG.1

## FIG.4

## FIG.3

## FIG.2

Office européen
des brevets

**RAPPORT DE RECHERCHE EUROPEENNE**

Numero de la demande

EP 92 40 0373

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | EP-A-0 229 545 (VALEO) --- | | B60H1/00 F16K7/16 |
| A | DE-A-1 052 760 (BMW) --- | | |
| A | GB-A-2 100 417 (TOYOTA) ----- | | |
| | | | **DOMAINES TECHNIQUES RECHERCHES (Int. Cl.5 )** |
| | | | B60H F16K |

Le présent rapport a été établi pour toutes les revendications

| Lieu de la recherche | Date d'achèvement de la recherche | Examinateur |
|---|---|---|
| LA HAYE | 03 AVRIL 1992 | CHRISTENSEN C. |

### CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons
...........................................................................................
& : membre de la même famille, document correspondant

EPO FORM 1503 03.82 (P0402)